# FASCICULE DE BREVET EUROPEEN

(11) **EP 1 559 103 B1**
(45) Date de publication et mention de la délivrance du brevet: **18.10.2006**
(21) Numéro de dépôt: 03782518.9
(22) Date de dépôt: 05.11.2003
(51) Int. Cl.: G11B 23/03

(54) **CONDITIONNEMENT POUR UN SUPPORT D'ENREGISTREMENT NUMERIQUE EN FORME DE DISQUE**
SCHUTZBEHÄLTER FÜR EINEN PLATTENFÖRMIGEN TRÄGER NUMERISCHER DATEN
PACKAGE FOR A DISC-SHAPED DIGITAL RECORDING MEDIUM

(30) Priorité: 05.11.2002 FR 0213840; 13.02.2003 FR 0301752
(43) Date de publication de la demande: 03.08.2005
(73) Titulaire: Moulage Industriel de Perseigne "MIP", 72600 La Fresnaye sur Chedouet (FR)
(72) Inventeur: Laroche, Francis, 16800 Soyaux (FR)
(74) Mandataire: Breese Derambure Majerowicz
(86) Numéro de dépôt international: PCT/FR2003/003308
(87) Numéro de publication internationale: WO 2004/042728

(56) Documents cités:
- US-A- 4 773 061
- PATENT ABSTRACTS OF JAPAN vol. 2000, no. 23, 10 février 2001 (2001-02-10) & JP 2001 171773 A (DF SHOEI:KK), 26 juin 2001 (2001-06-26)
- PATENT ABSTRACTS OF JAPAN vol. 1998, no. 03, 27 février 1998 (1998-02-27) & JP 09 301470 A (GRAPAC JAPAN KK), 25 novembre 1997 (1997-11-25)
- PATENT ABSTRACTS OF JAPAN vol. 1999, no. 02, 26 février 1999 (1999-02-26) & JP 10 310184 A (RIHITO RABU:KK), 24 novembre 1998 (1998-11-24)

## Description

La présente invention concerne le domaine des emballages pour des supports d'enregistrement numérique en forme de disque, tels que des CD, des DVD ou des mini-CD.

Dans l'état de la technique, on connaît le principe général des emballages comprenant un téton de centrage sur lequel le disque est clipper. Les tétons de centrages présentent généralement plusieurs pétales déformables. Ils sont formés soit par moulage du fond d'un emballage en matière plastique, soit sous forme de pièce collée sur un support en carton.

A titre d'exemple, le brevet FR2810442 décrit un boîtier pour DVD, CD ou VCD constitué d'un corps, d'un couvercle, d'un mécanisme de charnière moulé et comprenant un élément saillant annulaire. L'élément saillant s'étend vers le haut à partir du corps pour supporter un disque. Cet élément saillant est formé par une collerette protubérante présentant des ailettes flexibles se logeant dans le trou de centrage d'un disque. Ces pétales sont fragiles et cassantes et peuvent se briser lors du transport ou de la mise en place ou du retrait du disque. Les pétales brisés se déplacent alors entre l'emballage et le disque et peuvent rayer la surface du disque.

Le coût de fabrication d'un tel boîtier est élevé car l'élément saillant doit être moulé dans un moule complexe, avec des tolérances de fabrication assez faibles. Ces pétales sont généralement sensibles à la température et n'assurent pas toujours le maintien efficace du disque.

Par ailleurs, lorsque la collerette est collée sur le fond du boîtier, ils peuvent s'arracher et être ingurgités par un enfant.

On a également proposé dans le brevet FR2730087 un boîtier en matière plastique souple dont le fond présente trois picots dressés verticalement par rapport au fond. Le disque est calé entre ces picots. Cette solution n'est pas très satisfaisante car le disque n'est pas maintenu correctement. De plus, les picots s'usent rapidement.

Dans le brevet US6443300, il est décrit un boîtier pour disque lequel comprend notamment une base présentant une cavité pour recevoir un ou plusieurs disques, et des pattes de retenue de disques reliées à ladite base. Ces pattes, qui s'étendent sur les parties périphériques d'un ou plusieurs disques disposée dans la cavité et maintiennent le ou lesdits disques dans ladite cavité (position de fermeture), peuvent être déplacées vers une position de libération de façon à permettre le retrait du ou des disques de ladite cavité.

Un tel boîtier présente cependant des inconvénients. En effet, la libération du ou des disque(s) nécessite une intervention manuelle directement sur les pattes de retenue, favorisant ainsi les risques de rayures par l'utilisateur lors du déplacement des pattes vers leur position de libération. En outre, l'opération consistant à déplacer ces pattes vers leur position de libération reste relativement peu pratique. En effet, cette opération nécessite soit une action successive de libération sur chacune desdites pattes, soit l'utilisation des deux mains de l'utilisateur pour une ouverture simultanée de deux pattes.

Une autre solution décrite dans le JP-A-2001171773 consiste à retenir le disque par une languette centrale et à le caler au moyen d'un flasque latéral venant en contact avec le chant du disque. Cependant avec une telle disposition, l'introduction et le retrait du disque s'accompagnent de déformations excessives et préjudiciables. Le but de la présente invention est de proposer un nouveau type de conditionnement évitant les inconvénients des dispositifs de l'art antérieur.

A cet effet, l'invention concerne selon son acception la plus générale un conditionnement pour un support d'enregistrement numérique en forme de disque, formé par un plateau présentant des moyens de centrage dudit disque, caractérisé en ce que le plateau présente au moins deux épaulements radiaux disposés de part et d'autre d'une ligne médiane de positionnement du disque, lesdits épaulements radiaux étant définis pour recouvrir au repos une zone marginale du disque et pour définir avec le fond du plateau une fente d'une hauteur sensiblement égale à l'épaisseur du disque.

De préférence, le plateau présente une cavité cylindrique pour le recevoir un disque, laquelle présente avantageusement un diamètre légèrement supérieur au diamètre dudit disque, de préférence de l'ordre de 4 à 5%.

Selon une variante, la cavité présente une forme ovale ou ellipsoïdale avec un petit axe correspondant sensiblement au diamètre du disque à insérer sur le plateau et un grand axe légèrement supérieur au diamètre dudit disque, le terme de "légèrement" signifiant que la différence dimensionnelle est suffisante pour permettre un déplacement selon le grand axe pour permettre une insertion dans la cavité tout en assurant le maintien par les épaulements radiaux lorsque le disque est au repos, en position d'insertion dans la cavité.

Avantageusement ladite cavité cylindrique présente, sur une bande périphérique annulaire, une profondeur correspondant sensiblement à l'épaisseur du disque.

Selon un mode de réalisation de l'invention, le plateau présente au moins une butée déformable élastiquement, ladite butée étant disposée préférentiellement en périphérie de la cavité.

Avantageusement, au moins une des butées est disposée au niveau d'une des fentes formées par un des épaulements et le fond dudit plateau. Selon une configuration particulière de l'invention, au moins une des butées est supportée par un des épaulements.

Avantageusement, au moins une des butées comprend au moins une patte de dimensions sensiblement rectangulaires, présentant de préférence une largeur légèrement décroissante entre ses extrémités et sa partie centrale.

Avantageusement, ladite patte présente une forme convexe dirigée vers ladite cavité cylindrique.

Selon une variante, ladite cavité cylindrique est prolongée, du côté opposé à l'un desdits épaulement, par une zone de préhension formant un creux débouchant dans ladite cavité.

Selon un mode de réalisation particulier, l'un des épaulements recouvre une zone de ladite cavité, la dimension de ladite zone étant inférieure à 5% du diamètre du disque.

Avantageusement, l'un des épaulements est formé par un prolongement radial recouvrant une partie de la cavité, sur une distance inférieure à 5% du diamètre du disque.

Selon une autre variante, l'un des épaulements est constitué par un élément basculant présentant une nervure d'une épaisseur correspondant à l'épaisseur du disque, ledit élément pouvant être déplacé entre une position où il maintient le disque dans la cavité, et une position dans laquelle il libère ledit disque.

Selon un autre mode de réalisation, l'un des épaulements présente un fond déformable élastiquement pendant la phase d'insertion du disque.

Selon un mode de réalisation avantageux de l'invention, le conditionnement comporte en outre au moins un second plateau pour loger au moins un second disque, ledit second plateau présentant au moins deux épaulements radiaux définis pour recouvrir au repos une zone marginale dudit disque et pour définir avec le fond du plateau une fente d'une hauteur sensiblement égale à l'épaisseur dudit disque, lesdits épaulements étant configurés pour permettre l'introduction et le retrait du disque par déformation élastique d'une partie dudit plateau.

Avantageusement, ledit second plateau recouvre au moins en partie ledit plateau. Préférentiellement, ledit second plateau recouvre 50% de la cavité du plateau.

L'invention sera mieux comprise à la lecture de la description qui suit, se référant aux dessins annexés concernant des exemples non limitatifs de réalisation,
où :
- la figure 1 représente une vue de dessus d'un premier exemple de réalisation du conditionnement selon l'invention,
- la figure 2 représente une vue en coupe AA dudit conditionnement,
- la figure 3 représente une vue en coupe d'une variante de réalisation dudit conditionnement,
- la figure 4 représente une vue de dessus d'une variante de réalisation,
- la figure 5 représente une vue en coupe de ladite variante,
- la figure 6 représente une vue de dessus d'une autre variante de réalisation,
- la figure 7 représente une vue de dessus d'une autre variante de réalisation,
- les figures 8 à 10 représentent des vues de détail selon des plans de coupe respectivement BB, CC et DD,
- la figure 11 représente une vue en perspective d'un autre exemple de réalisation d'un conditionnement pour deux supports d'enregistrement numérique,
- la figure 12 représente une vue de dessus du conditionnement de la figure 11 et
- les figures 13 à 15 représentent respectivement une vue de devant en perspective, une vue de derrière en perspective et une vue de dessus d'un autre exemple de réalisation d'un conditionnement pour deux supports d'enregistrement numérique, et
- la figure 16 représente une vue en perspective du conditionnement des figures 13 à 15, les supports d'enregistrement numérique étant disposés dans ledit conditionnement.

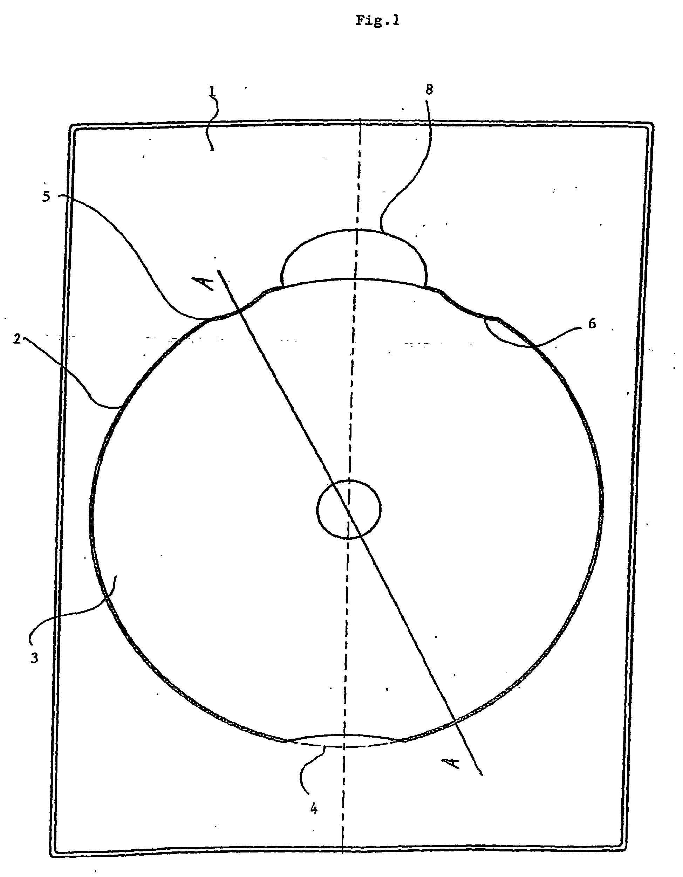

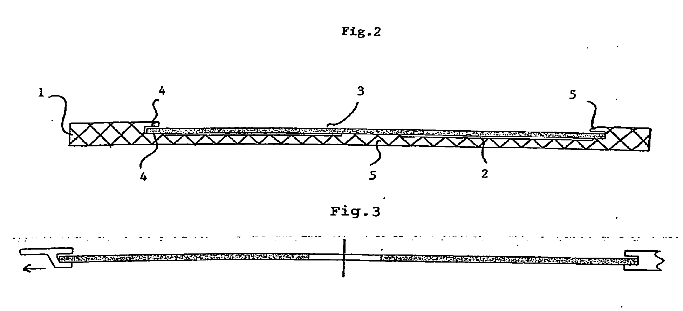

Les figures 1, 2 et 3 représentent une vue respectivement de dessus et en coupe d'un exemple de réalisation de l'invention et d'une vue en coupe d'une variante de réalisation de l'invention.

Le conditionnement est constitué par un plateau (1) présentant un logement de forme sensiblement cylindrique pour recevoir un disque (3).

Le plateau (1) est réalisé en matière plastique ou en tout autre matériau. Il présente une épaisseur supérieure à l'épaisseur du disque (3). Le logement est formé par une cavité (2) présentant une bordure annulaire et un îlot central (15). Il est prolongé par une zone de préhension (8) présentant une largeur d'environ 20 millimètres permettant de saisir le bord du disque (3) avec un doigt.

Le conditionnement présente trois épaulements (4 à 6) disposés de part et d'autre d'une ligne médiane transversale (7).

L'épaulement (4) est disposé transversalement et déborde pour recouvrir une zone périphérique de la cavité (2).

Les deux épaulements (5, 6) sont disposés symétriquement de part et d'autre de la zone de préhension (8). La surface supérieure présente un biseau facilitant l'introduction du disque.

Ils recouvrent également une zone périphérique de la cavité (2). Les épaulements (4 à 6) recouvrent la cavité sur un à deux millimètres, pour assurer un maintien efficace lorsque le disque (3) est en position, et une insertion et un retrait facile par déformation élastique d'une partie du plateau (1).

Dans un mode de réalisation préféré de l'invention, la partie déformable dudit plateau (1) consiste en un élément formant une butée. Avantageusement, ladite butée est une patte (16) de forme convexe, présentant une largeur légèrement décroissante entre ses extrémités et sa partie centrale.

Ladite patte (16), fixée audit plateau (1) au niveau de ses extrémités, est disposée dans la fente formée par ledit épaulement (4) et le fond du plateau (1) de façon à constituer une butée se déformant lors de l'introduction et le retrait du disque (3) et reprenant sa forme initiale une fois le disque (3) inséré ou retiré de ladite cavité (2).

Dans ce mode de réalisation, les pattes et le plateau (1) sont constitués en matière plastique.

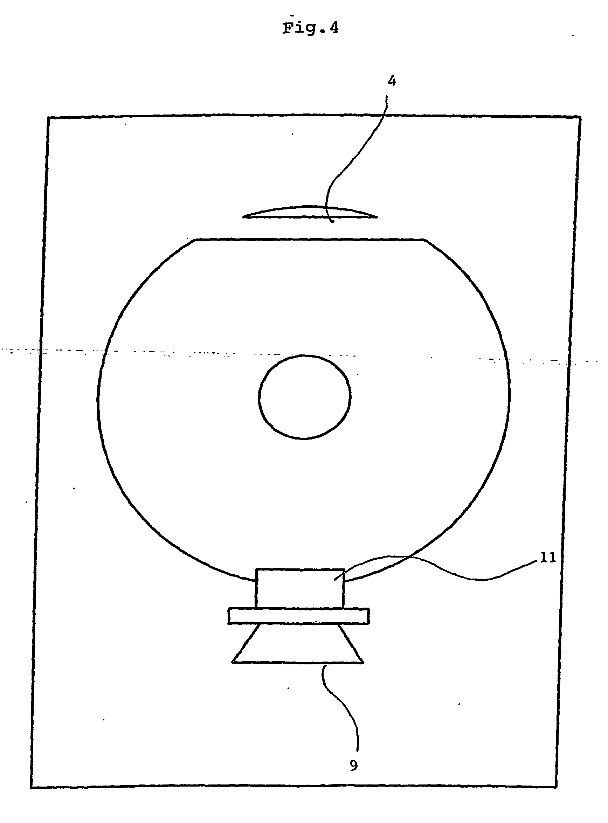

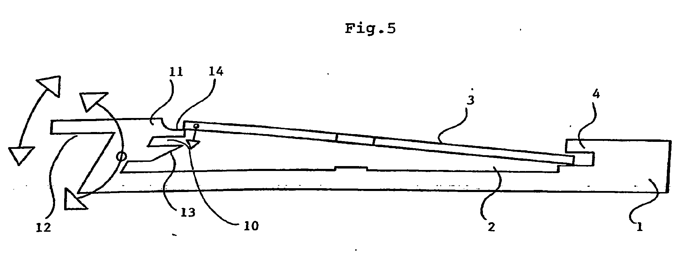

Les figures 4 et 5 représentent une variante de réalisation.

Le plateau (1) présente un épaulement transversal (4) et du côté diamétralement opposé un élément de verrouillage (9) présentant une nervure (10) dont la hauteur correspond sensiblement à l'épaisseur du disque (3).

L'élément de verrouillage (9) est monté de façon pivotante, par exemple par déformation élastique d'une zone présentant une découpe périphérique et une zone non découpée formant charnière.

Il est prolongé par un levier (12) permettant le basculement lors de l'insertion ou du retrait du disque (2).

L'élément de verrouillage présente une partie inférieure (13) de longueur inférieure à la partie supérieure (12), dont la partie supérieure est en biais.

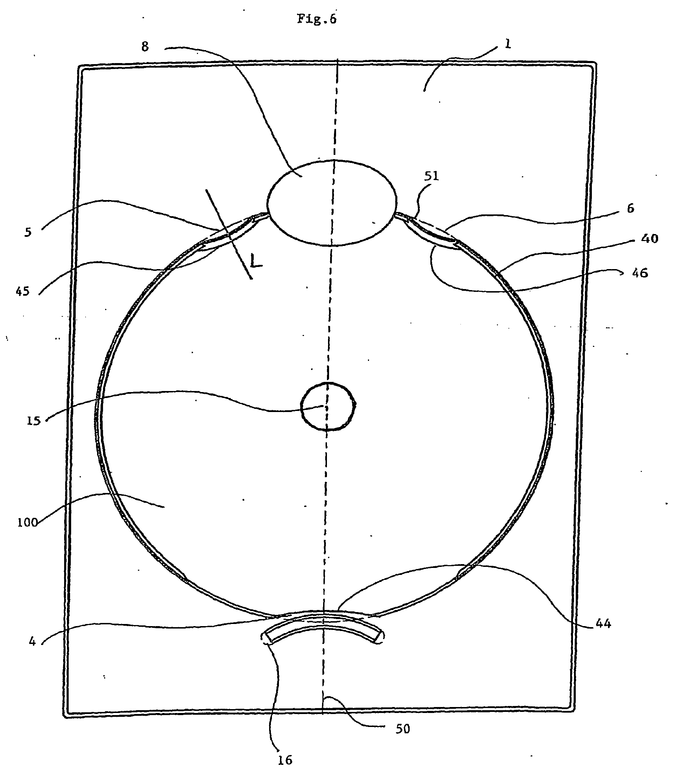

La figure 6 représente une vue de dessus d'une variante de réalisation. Le plateau présente un logement (2) dont la longueur, mesurée selon un axe passant par la cavité (8), est supérieure à la section nominale du disque destiné à être logé dans ce logement. Ce logement peut être de forme circulaire, avec un diamètre légèrement supérieur au diamètre nominal d'un disque, ou encore de forme ovale, avec une largeur correspondant sensiblement au diamètre d'un disque, et la longueur étant supérieure au diamètre du disque. La différence entre le diamètre du disque et la longueur du logement est suffisante pour permettre l'engagement du disque dans le logement, mais réduite pour permettre un maintien par les épaulements (4, 5, 6).

Le logement (2) recevant le disque présente un prolongement (8) pour le passage d'un doigt. De part et d'autre de cette cavité, le plateau présente deux ergots (5, 6) débordant légèrement de quelques millimètres au-dessus du logement dans lequel est logé le disque. Ces ergots (5, 6) sont situés dans le plan supérieur du plateau, et délimitent avec le fond du logement (2) un espace dont la hauteur correspond sensiblement à l'épaisseur d'un disque.

Du côté opposé à la cavité, le plateau présente une lame ressort (16) disposée sur l'axe longitudinal (50)passant par la cavité (8). Cette lame ressort (16) peut être réalisée sous différentes formes, et même être remplacée par un élément déformable élastiquement, ou un ressort. Dans l'exemple décrit, elle présente la forme d'une lame arquée concave pénétrant au repos dans l'espace prévu pour contenir le disque.

Elle est recouverte par un ergot (4) situé dans le plan supérieur du plateau. Cet ergot (4) défini, comme les ergots (5, 6), un espace dont la hauteur correspond sensiblement à la hauteur du disque.

Le cercle imaginaire (40) passant par les zones (44, 45, 46) des ergots respectivement (4, 5, 6) qui sont le plus proches du centre (15) du logement présente une section inférieure à la section nominale d'un disque destiné à être positionné dans le logement (2). La différence entre la section de ce cercle virtuel (40) et la section nominale d'un disque correspond sensiblement à la longueur radiale L d'un ergot, et à l'amplitude de la déformation de la lame élastique (16), mesurée sur l'axe longitudinal (50).

Les deux ergots (5, 6) sont disposés symétriquement de part et d'autre d'un axe longitudinal (50) passant par le centre de la cavité (21) pour le passage du doigt.

Le plateau est formé par moulage ou thermoformage d'une feuille de matière plastique. Il peut être collé sur un support en carton ou dans une pochette ou encore sur le dos d'un livre.

L'introduction du disque peut être réalisé manuellement ou automatiquement, avec un équipement réalisant une insertion du disque sur le plateau avec un angle initial de quelques degrés.

Elle se fait par glissement du bord du disque sous l'ergot (4). Pour cela, le disque est introduit avec une légère inclinaison par rapport au plateau.

En poussant le disque contre la lame (16), on peut continuer à le faire glisser sous l'ergot (4), puis à le plaquer contre le fond du logement (2).

En libérant alors le disque, la lame ressort (16) le repousse vers le bord opposé, et le bord du disque vient se loger alors sous les ergots (5, 6) et vient en butée contre le bord périphérique (51) du logement (2).

Le disque est alors maintenu dans le logement par les bords (44, 45, 46) des trois ergots (4, 5, 6).

Pour le retirer du logement, on engage le doigt dans la cavité (8).

On peut ainsi repousser le disque vers la lame ressort (16), ce qui a pour effet de libérer le bord supérieur des ergots (5, 6). On exerce un effet de levier sur le bord supérieur du disque avec le doigt introduit dans la cavité, et on lui fait prendre un angle par rapport au plan du plateau, ce qui lui permet de se dégager des ergots (5, 6). Le disque peut alors être retiré par un glissement selon l'axe longitudinal (50) jusqu'à ce qu'il soit libéré de l'ergot inférieur (4).

Bien entendu, ces mouvements sont faibles, de quelques millimètres.

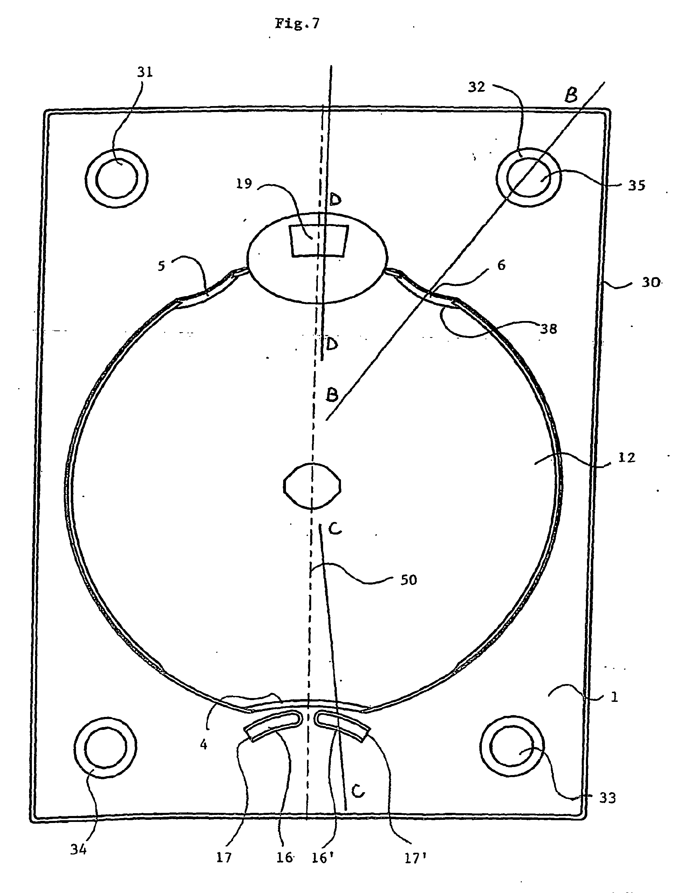

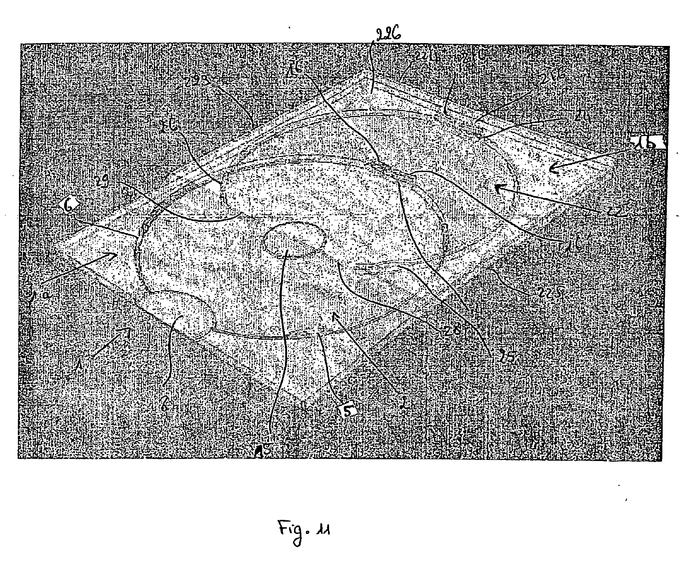

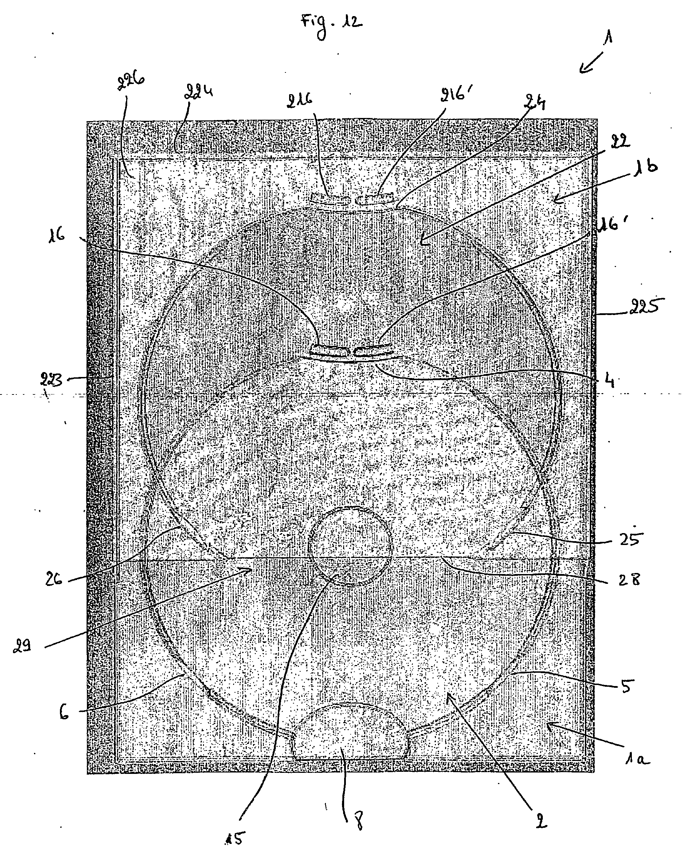

Une autre variante de réalisation est décrite en référence aux figures 7 à 10, représentant respectivement une vue de dessus et des vues en coupe, à une échelle agrandie.

Le plateau (1) est formé par moulage ou éventuellement par thermoformage d'une matière plastique transparente. Il présente une cavité (2) destinée comme dans les exemples précédents à recevoir un disque. Cette cavité est de forme ovale, allongé selon l'axe (50) passant par le logement (8) pour le passage du doigt.

Le plateau présente un rebord (30) formant un cadre périphérique. Il contribue à la rigidité du plateau en limitant les déformations par torsion, et permet ainsi de réduire l'épaisseur du plateau (1).

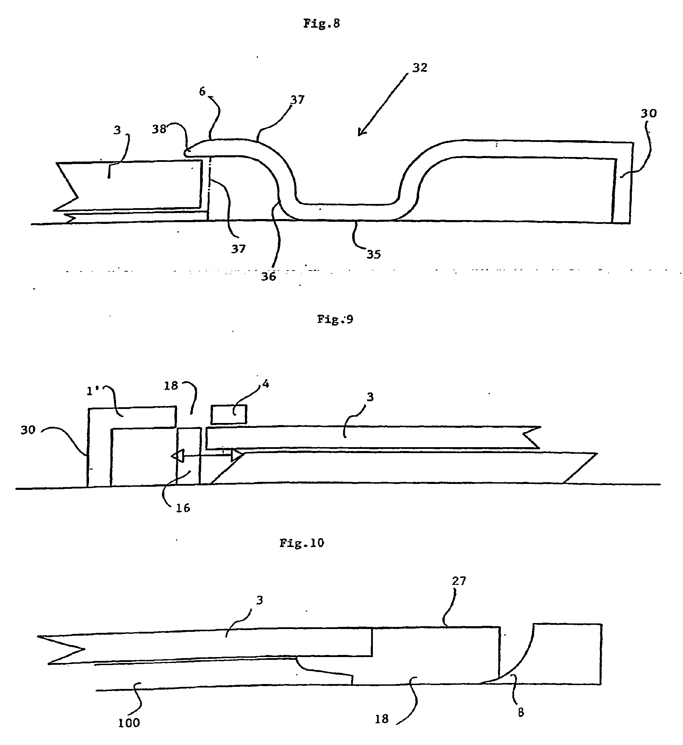

Il présente par ailleurs quatre zones (31 à 34) pour le collage du plateau sur une feuille de carton ou un étui. La figure 8 représente une vue agrandie, en coupe selon un plan passant par l'une de ces zones de collage.

Les zones de collages (31 à 34) présentent une forme hémisphérique avec un fond plat (35) et une,bordure périphérique (36) évasée aboutissant tangentiellement dans le plan de la surface supérieure (37) du plateau (1).

Cette forme hémisphérique à fond plat permet de réaliser un collage avec un film de colle transparente s'étalant parfaitement sur la surface de jonction entre le plateau et le support en carton, et permet de conserver la visibilité des informations inscrites sur le support en carton.

L'épaulement (6) déborde d'environ 1 millimètre le périmètre (37) du logement du disque (3). Il présente, vue de dessus, une forme arquée, avec un bord (38) chanfreiné.

Le disque (3) est maintenu sur le bord opposé aux deux épaulements (5, 6) par un épaulement (4) présentant également, vue de dessus, une forme arquée. Le disque (3) vient par ailleurs en butée contre la lame ressort formée de deux segments (16, 16') déformables élastiquement, et solidaires au plateau (1) par leurs extrémités (17, 17'). Le plateau (1) présente une découpe (18) libérant les deux segments (16, 16') et permettant un débattement par flexion autour de la zone de fixation (17, 17') par déformation élastique des deux segments (16, 16' ) .

A l'opposé de cette lame ressort, le plateau présente une cavité (8) réalisée par une réduction locale de l'épaisseur du plateau (1), et éventuellement une fenêtre (19) permettant un engagement plus profond du doigt sous le disque (3). La forme de cette cavité (8) est ovale. Le fond (100) du plateau (1) peut éventuellement présenter une lumière pour économiser la quantité de plastique et donner un aspect esthétique particulier.

Dans une forme particulière, le plateau présente une patte (27) raccordée de manière sécable au plateau. Cette patte sécable (27) vient recouvrir une partie de la cavité (8) ainsi que le bord du disque (3) avant la première ouverture.

Lors de l'achat du produit, le client casse la patte sécable (27) et peut alors introduire son doigt dans la cavité (8), et repousser le disque (3) vers la lame ressort (16) pour le libérer du plateau. Cette patte peut présenter différentes formes et être raccordée soit sur une zone de la cavité (8) soit prolonger la partie supérieure du plateau (1), au voisinage de la cavité (8).

La figure 11 illustre un autre exemple de réalisation d'un conditionnement selon l'invention, ledit conditionnement permettant de conditionner deux supports d'information du type disque (3).

Ledit conditionnement est constitué par un plateau (1) présentant deux zones de support (1a, 1b) pour disque disposées en étage. Chacune des zones de support (1a, 1b) comporte un logement pour recevoir un disque.

Le logement de la zone de support (la) destiné à recevoir un premier disque est sensiblement de forme cylindrique, et présente une épaisseur supérieure à l'épaisseur dudit disque.

Le logement da la zone de support (1a) est formé par une cavité (2) présentant une bordure annulaire et un îlot central (15). Il est prolongé par une zone de préhension (8) permettant de saisir le bord dudit premier disque avec un doigt.

La zone de support (1a) présente trois épaulements radiaux (4 à 6) recouvrant une partie périphérique de ladite cavité (2) de l'ordre de un à deux millimètres. Avantageusement, les épaulements (5 et 6) sont disposés symétriquement de part et d'autre de la zone de préhension (8), l'épaulement (4) étant formé sur le bord de ladite zone de support (la) opposé à ladite zone de préhension (8).

Ladite zone de support (la) présente en outre une zone déformable élastiquement laquelle consiste en un élément formant butée. Avantageusement, ladite butée est formée de deux segments (16, 16') de forme convexe.

Ainsi, de par cette configuration, le premier disque est non seulement maintenu efficacement dans ladite cavité (2) par lesdits épaulements (4 à 6), mais également inséré et retiré aisément de ladite cavité (2) du fait desdits segments déformables (16, 16') constituant ladite zone de support (la) du plateau (1).

La seconde zone de support (1b) présente également un logement pour recevoir au moins en partie un second disque.

La seconde zone de support (1b) présente deux parois latérales (223, 225), une paroi arrière (224) et une paroi supérieure (226) sur laquelle est formé ledit logement destiné à recevoir le second disque. Avantageusement, ledit second plateau (21) présente une épaisseur supérieure à l'épaisseur du second disque.

Ledit logement consiste en une cavité (22) comportant un fond en forme de cercle muni d'une ligne de découpe (28), et une paroi annulaire longeant au moins en partie ledit fond, de sorte qu'une ouverture (29) est formée sur la face avant de la seconde zone de support (1b).

Ainsi, lorsque le disque est positionné dans la cavité (22) de ladite seconde zone de support (1b), ledit disque présente une partie, plus ou moins importante suivant l'ouverture (29) formée sur la face avant de la zone de support (1b), s'étendant hors de ladite cavité (22). La partie libre du disque permettra alors avantageusement sa manipulation, en particulier lors de son retrait de la cavité (22).

Bien que non représenté sur la figure 11, ladite cavité (22) pourra également présenter, selon un mode de réalisation particulier de l'invention, un îlot central (215).

De même que la première zone de support (la), la seconde zone de support (1b) présente trois épaulements radiaux (24 à 26) recouvrant une zone périphérique de ladite cavité (22) de l'ordre de un à deux millimètres. Avantageusement, les épaulements (25 et 26) sont disposés symétriquement de part et d'autre de la ligne de découpe (28), l'épaulement (24) étant formé sur le bord de la seconde zone (1b) opposé à ladite ligne de découpe (28).

De même que la première zone de support (1a), ladite seconde zone de support (1b) est constituée d'une partie déformable consistant en deux segments (216, 216') de forme convexe.

Ainsi, lorsqu'on insère un disque dans la cavité (22) de la seconde zone de support (1b), le disque exerce une pression sur lesdits segments (216, 216') lesquels, sous cette action, se déforment pour permettre l'insertion du disque dans ladite cavité (22). Le disque est alors fermement maintenu dans ladite cavité (22) par lesdits épaulements (24 à 26) et lesdits segments (216, 216') ayant repris leur position initiale. Le retrait du disque de la cavité (22) est effectué en poussant sur la partie du disque s'étendant hors de la cavité (22) en direction desdits segments (216, 216') qui, sous l'action dudit disque, se déforment pour permettre de retirer le disque de la cavité (22) de ladite seconde zone de support (1b).

Avantageusement, ladite seconde zone de support (1b) est disposée sur la zone de support (1a) de façon à recouvrir partiellement ladite première zone de support (la), et plus spécifiquement une partie de la cavité (2) de ladite première zone de support (la). Dans un mode de réalisation préféré de l'invention, ladite seconde zone de support (1b) couvre au moins 50% de la cavité (2) de ladite première zone de support (la).

D'autre part, ladite seconde zone de support (1b) est disposée sur ladite première zone de support (la) de telle sorte que la paroi arrière (224) et les parois latérales (223, 225) correspondent sensiblement à une extension de la paroi arrière et au moins en partie des parois latérales de ladite première zone de support (la).

D'autre part, ladite seconde zone de support (1b) est disposée sur ladite première zone de support (la) de façon à laisser un espacement suffisant entre le fond de ladite seconde zone de support (1b) et le fond de la cavité (2) du premier plateau (1) pour l'insertion et le retrait du premier disque dans ladite première zone de support (la). En effet, lors de l'opération d'insertion du disque dans la cavité (2), il s'agit de pouvoir glisser le premier disque dans la cavité (2) de ladite première zone de support (la) avec une légère inclinaison. De même, lors du retrait du disque de la cavité (2), il s'agit de pouvoir donner au disque une inclinaison suffisante pour lui permettre de se dégager des épaulements (5, 6) constituant ladite première zone de support (la).

La disposition des première et seconde zones de support (1a, 1b) rend ainsi possible l'insertion et le retrait des premier et second disques indépendamment l'un de l'autre. En d'autres termes, le retrait (par exemple) du premier disque de la cavité (2) de la première zone de support (la) avec un conditionnement selon l'invention ne nécessite pas, à la différence des conditionnements connus de l'art antérieur, le retrait du second disque disposé dans la cavité (22) de la seconde zone de support (1b), et inversement.

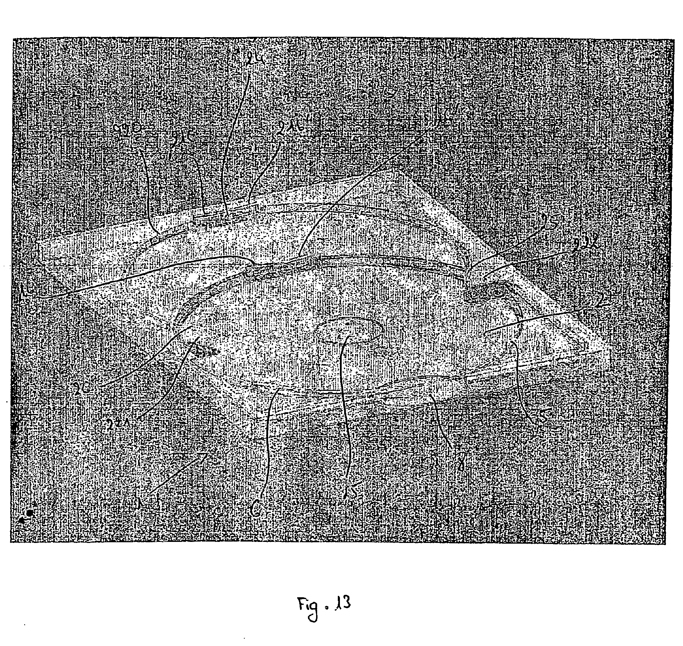

La figure 12 représente une vue de dessus du conditionnement constitué desdits plateaux (1, 21).

Ladite seconde zone de support (1b) est disposée sur ladite première zone de support (la) de façon à ce que lesdits épaulements (24 à 26) soient disposés dans l'alignement respectivement des épaulements (4 à 6) de ladite première zone (la), et à ce que l'ouverture (29) de la cavité (22) sur la face avant de ladite seconde zone de support (1b) soit dirigée vers la zone de préhension (8) de ladite première zone de support (la).

Bien que les figures 11 et 12 illustrent un conditionnement muni de deux zones de support (1a, 1b) étagées pour recevoir deux disques, il est entendu que l'homme du métier pourra concevoir des conditionnements comportant une pluralité de zones de support étagées et disposées les uns par rapport aux autres de façon à permettre le conditionnement d'une pluralité de disques sans pour autant sortir du champ de la présente invention.

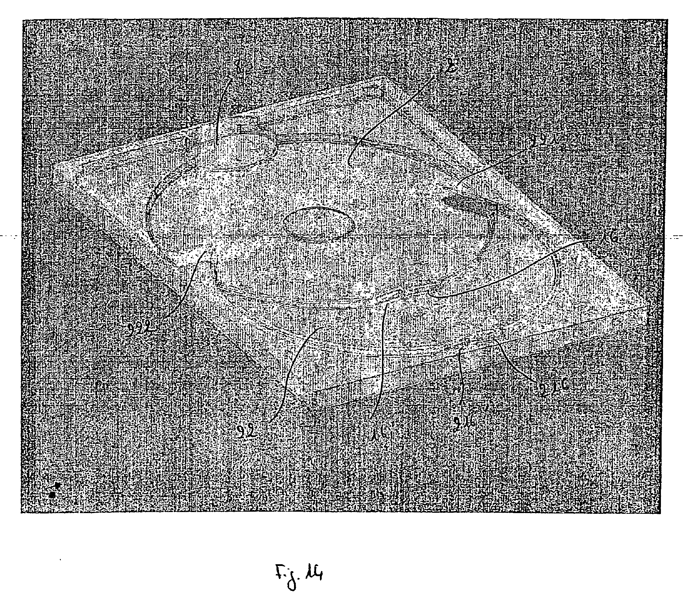

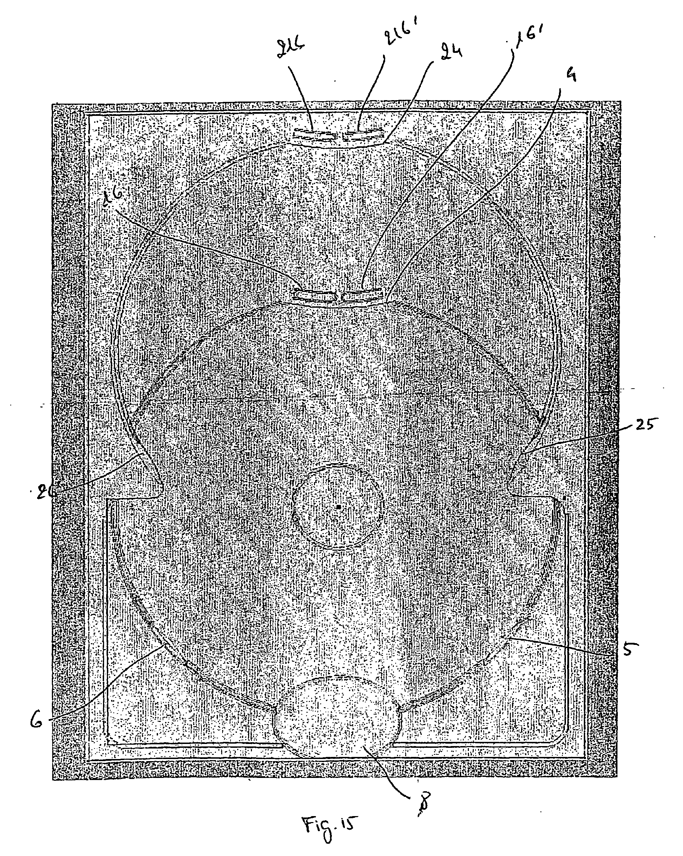

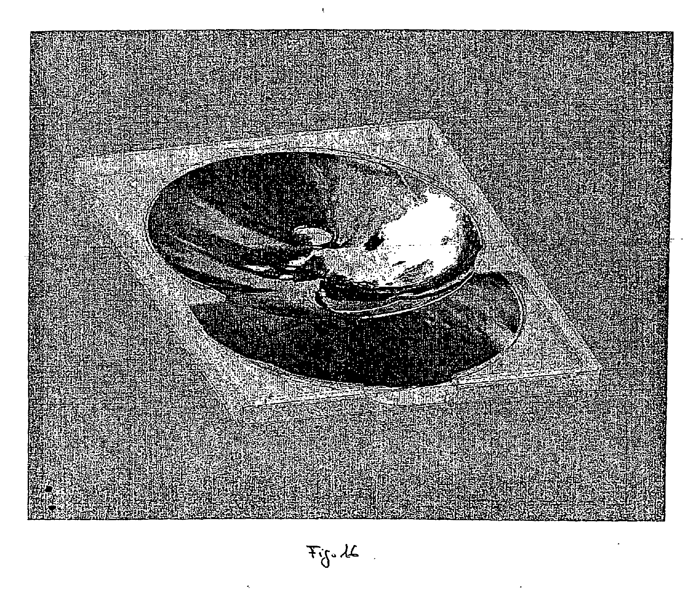

Les figures 13 à 15 représentent un autre exemple de réalisation d'un conditionnement pour deux supports d'enregistrement numérique du type disque.

Le conditionnement est constitué d'un plateau (1) présentant deux logements, un logement inférieur et un logement supérieur, destinés à recevoir respectivement un disque. De ce fait, ledit plateau (1) présente une épaisseur supérieure à l'épaisseur de deux disques.

Le logement inférieur est avantageusement de forme cylindrique pour recevoir un premier disque. Plus particulièrement ledit logement inférieur consiste en une cavité (2) présentant une bordure annulaire et un îlot central (15).

Comme précédemment, la cavité (2) présente sur sa périphérie les épaulements radiaux (4 à 6) et les segments (16, 16') formant un élément de butée déformable élastiquement.

Le logement supérieur, quant à lui, consiste en une cavité (21) en forme de croissant de lune munie sur sa périphérie externe d'une bordure (220) et dont les extrémités (221, 222) s'étendent au-dessus de ladite cavité (2) inférieure.

Ainsi, lorsque le second disque est positionné dans la cavité (22) supérieure, ledit disque présente une partie s'étendant au-dessus de la cavité (2) inférieure, ou, lorsque le conditionnement comporte les deux disques au-dessus du disque inférieur comme illustré sur la figure 16. De même que pour la cavité (2) inférieure, ladite cavité (22) supérieure présente sur sa périphérie des épaulements radiaux (24 à 26) et des segments (216, 216') formant un élément de butée déformable élastiquement.

De même que précédemment, il est entendu que l'homme du métier pourra concevoir des conditionnements comportant une pluralité de cavités disposées les unes par rapport aux autres de façon à permettre le conditionnement d'une pluralité de disques sans pour autant sortir du champ de la présente invention.

L'invention est décrite dans ce qui précède à titre d'exemple. Il est entendu que l'homme du métier est à même de réaliser différentes variantes de l'invention sans pour autant sortir du cadre du brevet.

## Revendications

1. Conditionnement pour support d'enregistrement numérique en forme de disque (3), formé par un plateau (1) présentant des moyens de centrage dudit disque (3), **caractérisé en ce que** le plateau (1) présente au moins deux épaulements radiaux (4 à 6) définis pour recouvrir au repos une zone marginale du disque (3) et pour définir avec le fond du plateau (1) une fente d'une hauteur sensiblement égale à l'épaisseur du disque (3), lesdits épaulements (4 à 6) étant configurés pour permettre l'introduction et le retrait du disque (3) par déformation élastique d'une partie dudit plateau (1).

2. Conditionnement selon la revendication 1, **caractérisé en ce que** le plateau (1) présente une cavité (2) cylindrique pour recevoir le disque (3).

3. Conditionnement selon la revendication 1 ou la revendication 2, **caractérisé en ce que** ladite cavité (2) présente un diamètre légèrement supérieur au diamètre dudit disque (3).

4. Conditionnement selon la revendication 2 ou la revendication 3, **caractérisé en ce que** ladite cavité (2) présente une forme ovale avec un grand axe légèrement supérieur au diamètre dudit disque (3) et un petit axe correspondant sensiblement au diamètre dudit disque.

5. Conditionnement selon la revendication 2, **caractérisé en ce que** ladite cavité (2) cylindrique présente une bande périphérique annulaire, lesdits épaulements étant disposés pour former avec ladite bande annulaire une rainure d'engagement correspondant sensiblement à l'épaisseur du disque (3).

6. Conditionnement selon l'une quelconque des revendications 2 à 4, **caractérisé en ce que** le plateau (1) présente au moins une butée (16) déformable élastiquement, ladite butée étant disposée en périphérie de la cavité.

7. Conditionnement selon la revendication 5, **caractérisé en ce qu'**au moins une desdites butées est disposée au niveau d'une des fentes formée par un desdits épaulements et le fond dudit plateau.

8. Conditionnement selon la revendication 5 ou la revendication 6, **caractérisé en ce qu'**au moins une desdites butées est supportée par un desdits épaulements.

9. Conditionnement selon l'une quelconque des revendications 5 à 7, **caractérisé en ce qu'**au moins une desdites butées comprend au moins une patte (16), présentant de préférence une largeur légèrement décroissante entre ses extrémités et sa partie centrale.

10. Conditionnement selon la revendication 8, **caractérisé en ce que** ladite patte (16) présente une forme convexe dirigée vers ladite cavité (2) cylindrique.

11. Conditionnement selon l'une quelconque des revendications 2 à 9, **caractérisé en ce que** ladite cavité (2) cylindrique est prolongée, du côté opposé à l'un desdits épaulements (4 à 6), par une zone de préhension (8) formant un creux débouchant dans ladite cavité (2).

12. Conditionnement selon l'une quelconque des revendications 2 à 10, **caractérisé en ce que** l'un des épaulements (4 à 6) recouvre une zone de ladite cavité (2), la dimension de ladite zone étant inférieure à 5% du diamètre du disque (3).

13. Conditionnement selon l'une quelconque des revendications 2 à 11, **caractérisé en ce que** l'un des épaulements (4 à 6) est formé par un prolongement radial recouvrant une partie de la cavité (2), sur une distance inférieure à 5% du diamètre du disque (3).

14. Conditionnement selon l'une quelconque des revendications 2 à 12, **caractérisé en ce que** l'un des épaulements (4 à 6) est constitué par un élément basculant présentant une nervure (10) d'une épaisseur correspondant à l'épaisseur du disque (3), ledit élément pouvant être déplacé entre une position où il maintient le disque (3) dans la cavité (2), et une position dans laquelle il libère ledit disque (3).

15. Conditionnement selon la revendication 1, **caractérisé en ce que** l'un desdits épaulements (4 à 6) présente un fond déformable élastiquement pendant la phase d'insertion du disque (3).

16. Conditionnement selon la revendication 2, **caractérisé en ce que** le bord de la cavité (2) présente au moins un ergot (23) débordant de quelques dixièmes de millimètres au-dessus de la cavité dans laquelle est logé le disque (3) et au moins une butée de profondeur (22) déformable élastiquement laquelle est prévue sur la périphérie de la cavité (1).

17. Conditionnement selon la revendication 2, **caractérisé en ce que** la cavité (2) présente une bordure périphérique définissant avec les épaulements une fente présentant une hauteur correspondant à l'épaisseur du disque, et un îlot central de forme annulaire.

18. Conditionnement selon l'une quelconque des revendications 2 à 17, **caractérisé en ce que** le plateau comporte en outre au moins une cavité complémentaire (22) pour recevoir au moins un disque complémentaire (22), ladite cavité (22) présentant en périphérie au moins deux épaulements radiaux (24 à 26) définis pour recouvrir au repos une zone marginale dudit disque complémentaire et pour définir avec le fond de la cavité (22) une fente d'une hauteur sensiblement égale à l'épaisseur dudit disque complémentaire, lesdits épaulements (24 à 26) étant configurés pour permettre l'introduction et le retrait du disque par déformation élastique d'une partie dudit plateau (1).

## Claims

1. Packaging for a digital recording medium in the form of a disc (3), formed by a tray (1) having means of centring the said disc (3), **characterised in that** the tray (1) has at least two radial shoulders (4 to 6) defined to cover at rest a marginal area of the disc (3) and to define, with the bottom of the tray (1), a slot with a height substantially equal to the thickness of the disc (3), the said shoulders (4 to 6) being configured so as to allow the introduction and removal of the disc (3) by elastic deformation of part of the said tray (1).

2. Packaging according to claim 1, **characterised in that** the tray (1) has a cylindrical cavity (2) for receiving the disc (3).

3. Packaging according to claim 1 or claim 2, **characterised in that** the said cavity (2) has a diameter slightly greater than the diameter of the said disc (3).

4. Packaging according to claim 2 or claim 3, **characterised in that** the said cavity (2) has an oval shape with the major axis slightly greater than the diameter of the said disc (3) and the minor axis corresponding substantially to the diameter of the said disc.

5. Packaging according to claim 2, **characterised in that** the said cylindrical cavity (2) has an annular peripheral band, the said shoulders being disposed so as to form, with the said annular band, an engagement groove corresponding substantially to the thickness of the disc (3).

6. Packaging according to any one of claims 2 to 4, **characterised in that** the tray (1) has at least one elastically deformable stop (16), the said stop being disposed at the periphery of the cavity.

7. Packaging according to claim 5, **characterised in that** at least one of the said stops is disposed level with one of the slots formed by one of the said shoulders and the bottom of the said tray.

8. Packaging according to claim 5 or claim 6, **characterised in that** at least one of the said stops is supported by one of the said shoulders.

9. Packaging according to any one of claims 5 to 7, **characterised in that** at least one of the said stops comprises at least one tab (16), preferably having a width decreasing between its ends and its central part.

10. Packaging according to claim 8, **characterised in that** the said tab (16) has a convex shape directed towards the said cylindrical cavity (2).

11. Packaging according to any one of claims 2 to 9, **characterised in that** the said cylindrical cavity (2) is extended, on the side opposite to one of the said shoulders (4 to 6), by a gripping area (8) forming a hollow opening out in the said cavity (2).

12. Packaging according to any one of claims 2 to 10, **characterised in that** one of the shoulders (4 to 6) covers an area of the said cavity (2), the dimension of said area being 5% less than the diameter of the disc (3).

13. Packaging according to any one of claims 2 to 11, **characterised in that** one of the shoulders (4 to 6) is formed by a radial extension covering part of the cavity (2) over a distance 5% less than the diameter of the disc (3).

14. Packaging according to any one of claims 2 to 12, **characterised in that** one of the shoulders (4 to 6) consists of a tilting element having a rib (10) with a thickness corresponding to the thickness of the disc (3), the said element being able to be moved between a position in which it holds the disc (3) in the cavity (2) and a position in which it releases the said disc (3).

15. Packaging according to claim 1, **characterised in that** one of the said shoulders (4 to 6) has a bottom that is elastically deformable during the phase of insertion of the disc (3).

16. Packaging according to claim 2, **characterised in that** the edge of the cavity (2) has at least one lug (23) projecting by a few tenths of a millimetre above the cavity in which the disc (3) is housed and at least one stop (22) with an elastically deformable depth that is provided on the periphery of the cavity (1).

17. Packaging according to claim 2, **characterised in that** the cavity (2) has a peripheral border defining with the shoulders a slot having a height corresponding to the thickness of the disc, and a central annular-shaped island.

18. Packaging according to any one of claims 2 to 17, **characterised in that** the tray also comprises at least one additional cavity (22) for receiving at least one additional disc (22), the said cavity (22) having at its periphery at least two radial shoulders (24 to 26) defined so as to cover at rest a marginal area of the said additional disc and to define, with the bottom of the cavity (22), a slot with a height substantially equal to the thickness of the said additional disc, the said shoulders (24 to 26) being configured so as to allow the introduction and removal of the disc by elastic deformation of part of the said tray (1).

## Patentansprüche

1. Verpackung für Träger von digitalen Aufzeichnungen in Form einer Scheibe (3), gebildet aus einem Teller (1) mit Mitteln zum Zentrieren der besagten Scheibe (3), **dadurch gekennzeichnet, daß** der Teller (1) mindestens zwei radiale Schultern (4 bis 6) aufweist, die so definiert sind, daß sie in Ruhestellung eine Randzone der Scheibe (3) abdecken, und daß sie mit dem Boden des Tellers (1) einen Schlitz in einer Höhe definieren, die in etwa gleich der Dicke der Scheibe (3) ist, wobei die besagten Schultern (4 bis 6) so konfiguriert sind, daß sie das Einlegen und das Herausnehmen der Scheibe (3) durch elastische Verformung eines Teils des besagten Tellers (1) erlauben.

2. Verpackung nach Anspruch 1, **dadurch gekennzeichnet, daß** der Teller (1) eine zylinderförmige Austiefung (2) für die Aufnahme der Scheibe (3) aufweist.

3. Verpackung nach Anspruch 1 oder Anspruch 2, **dadurch gekennzeichnet, daß** besagte Austiefung (2) einen gegenüber dem Durchmesser der besagten Scheibe (3) etwas größeren Durchmesser aufweist.

4. Verpackung nach Anspruch 2 oder Anspruch 3, **dadurch gekennzeichnet, daß** besagte Austiefung (2) eine ovale Form mit einer großen Achse aufweist, die etwas größer als der Durchmesser der besagten Scheibe (3) ist, und deren kleine Achse etwa dem Durchmesser der besagten Scheibe (3) entspricht.

5. Verpackung nach Anspruch 2, **dadurch gekennzeichnet, daß** besagte zylindrische Austiefung (2) einen ringförmigen Umfangsstreifen aufweist, wobei besagte Schultern so angeordnet sind, daß sie mit dem besagten ringförmigen Streifen eine Aufnahmerille bilden, die etwa der Dicke der Scheibe (3) entspricht.

6. Verpackung nach einem beliebigen der Ansprüche 2 bis 4, **dadurch gekennzeichnet, daß** der Teller (1) mindestens einen elastisch verformbaren Anschlag (16) aufweist, wobei der besagte Anschlag am Umfang der Austiefung angeordnet ist.

7. Verpackung nach Anspruch 5, **dadurch gekennzeichnet, daß** mindestens einer der besagten Anschläge an einem der Schlitze angeordnet ist, der von einer der besagten Schultern und dem Boden des besagten Tellers gebildet wird.

8. Verpackung nach Anspruch 5 oder Anspruch 6, **dadurch gekennzeichnet, daß** mindestens einer der besagten Anschläge von einer der besagten Schultern getragen wird.

9. Verpackung nach einem beliebigen der Ansprüche 5 bis 7, **dadurch gekennzeichnet, daß** mindestens einer der besagten Anschläge mindestens eine Knagge (16) umfaßt, die vorzugsweise eine leicht abnehmende Breite zwischen ihren Enden und ihrem Mittelteil aufweist.

10. Verpackung nach Anspruch 8, **dadurch gekennzeichnet, daß** die besagte Knagge (16) eine konvexe Form aufweist, die auf die besagte zylindrische Austiefung (2) ausgerichtet ist.

11. Verpackung nach einem beliebigen der Ansprüche 2 bis 9, **dadurch gekennzeichnet, daß** besagte zylindrische Austiefung (2) auf der einer der besagten Schultern (4 bis 6) gegenüberliegenden Seite durch eine Greifzone (8) verlängert ist, die eine Ausnehmung bildet, die zur besagten Austiefung (2) führt.

12. Verpackung nach einem beliebigen der Ansprüche 2 bis 10, **dadurch gekennzeichnet, daß** eine der Schultern (4 bis 6) eine Zone der besagten Austiefung (2) überdeckt, wobei die Abmessung der besagten Zone um 5% kleiner als der Durchmesser der Scheibe (3) ist.

13. Verpackung nach einem beliebigen der Ansprüche 2 bis 11, **dadurch gekennzeichnet, daß** eine der Schultern (4 bis 6) durch eine radiale Verlängerung gebildet wird, die einen Teil der Austiefung (2) überdeckt, und dies über einen Abstand, der um 5% kleiner als der Durchmesser der Scheibe (3) ist.

14. Verpackung nach einem beliebigen der Ansprüche 2 bis 12, **dadurch gekennzeichnet, daß** eine der Schultern (4 bis 6) durch ein Kippelement gebildet wird, das eine Rippe (10) in einer Dicke aufweist, die der Dicke der Scheibe (3) entspricht, wobei das besagte Element verschoben werden kann zwischen einer Position, in der es die Scheibe (3) in der Austiefung (2) hält, und einer Position, in der es die besagte Scheibe (3) freigibt.

15. Verpackung nach Anspruch 1, **dadurch gekennzeichnet, daß** eine der besagten Schultern (4 bis 6) einen während der Einlegephase der Scheibe (3) elastisch verformbaren Boden aufweist.

16. Verpackung nach Anspruch 2, **dadurch gekennzeichnet, daß** die Kante der Austiefung (2) mindestens einen Vorsprung (23) aufweist, der um einige Zehntel Millimeter über die Austiefung hinaussteht, in der die Scheibe (3) untergebracht ist, und mindestens einen elastisch verformbaren Tiefenanschlag (22), der am Umfang der Austiefung (2) vorgesehen ist.

17. Verpackung nach Anspruch 2, **dadurch gekennzeichnet, daß** die Austiefung (2) einen Umfangsrand aufweist, der mit den Schultern einen Schlitz bildet, deren Höhe der Dicke der Scheibe entspricht, und eine kleine zentrale Insel in Ringform.

18. Verpackung nach einem beliebigen der Ansprüche 2 bis 17, **dadurch gekennzeichnet, daß** der Teller außerdem mindestens eine ergänzende Austiefung (22) für die Aufnahme von mindestens einer zusätzlichen Scheibe (22) umfaßt, wobei die besagte Austiefung (22) am Umfang mindestens zwei radiale Schultern (24 bis 26) aufweist, die so definiert sind, daß sie in Ruhestellung eine Randzone der besagten zusätzlichen Scheibe abdecken, und daß sie mit dem Boden der Austiefung (22) einen Schlitz in einer Höhe definieren, die etwa gleich der Dicke der besagten zusätzlichen Scheibe ist, wobei die besagten Schultern (24 bis 26) so konfiguriert sind, daß sie das Einlegen und das Herausnehmen der Scheibe durch elastische Verformung eines Teils des besagten Tellers (1) erlauben.
